# EUROPEAN PATENT SPECIFICATION

(11) **EP 1 406 744 B1**
(45) Date of publication and mention of the grant of the patent: **29.03.2017**
(21) Application number: 02733619.7
(22) Date of filing: 29.05.2002
(51) Int. Cl.: B23K 26/10, B23K 7/10

(54) **APPARATUS AND METHOD FOR CUTTING WORKPIECES**
VERFAHREN UND VORRICHTUNG ZUM SCHNEIDEN VON WERKSTÜCKEN
APPAREIL ET PROCÉDÉ POUR DÉBITER DES PIÈCES A TRAVAILLER

(30) Priority: 01.06.2001 NL 1018199
(43) Date of publication of application: 14.04.2004
(73) Proprietor: HGG Profiling Equipment B.V., 1771 SW Wieringerswerf (NL)
(72) Inventor: GLIJNIS, Pieter, Cornelis, NL-1775 BP Middenmeer (NL)
(74) Representative: Metman, Karel Johannes
(86) International application number: PCT/NL2002/000343
(87) International publication number: WO 2002/096594

(56) References cited:
- EP-A- 0 983 819
- WO-A-86/04003
- AU-A- 9 030 582
- US-A- 4 533 814

## Description

The present invention relates to an apparatus for cutting workpieces, in particular elongated workpieces, such as tubular members and beams, according to the preamble of claim 1. The present invention also relates to a method of cutting workpieces. US 4 533 814 discloses such an apparatus according to the preamble of claim 1. Furthermore, US 4 533 814 discloses a method for cutting workpieces, in particular elongated workpieces, such as tubular members and beams, wherein the cutting element is rotated through an angle of maximally 180° about an axis parallel to the workpiece by means of a circular guide so as to carry out the cutting operation, and wherein the cutting element is also rotated about a number of other axes by means of a robot arm.US 5 256 212 discloses an apparatus for cutting workpieces, in particular elongated workpieces, such as tubular members and beams, which apparatus comprises a support for supporting the workpiece, a frame, a circular guide on the frame, on which a carrier is mounted, which carrier is provided with a controllable driving mechanism, wherein said carrier and said support are so positioned relative to each other that the workpiece extends through the guide during the cutting operation.

The circular guide of said apparatus is movable along two axes in directions perpendicular to the workpiece, whereas a cutting element is fixedly connected to the carrier. The cutting element can be moved along the workpiece by changing the position of the circular guide and moving the carrier along the circular guide.

The object of the present invention is to provide an apparatus of the kind referred to in the preamble of claim 1, which exhibits a higher degree of flexibility.

In order to accomplish that objective, a cutting apparatus according to claim 1 is provided. In such a cutting apparatus, the cutting element is connected to the carrier via a robot arm, whereas the control unit is furthermore arranged for controlling the robot arm.

Such an arrangement enables a large working range of the cutting element on the one hand, because the robot arm can rotate around the entire workpiece via the circular guide, whereas the robot arm is capable of providing a large number of degrees of freedom on the other hand, especially if the robot arm comprises at least two, and preferably six, axes of rotation to be controlled by the control unit. The circular guide allows a relatively small construction of the robot arm itself, because a large part of the movement around the workpiece is taken over by the circular guide. This helps to achieve a higher degree of precision.

Preferably, the support comprises driving means to be controlled by the control unit for moving the workpiece in its longitudinal direction during the cutting operation on the workpiece, in which case it is advantageous if the support comprises a roller conveyor and gripping rollers at least substantially at the location of the circular guide.

Said driving means makes it possible to move the workpiece in its longitudinal direction during the cutting operation, in such a manner that the cutting area is maintained at an advantageous position at all times, irrespective of the position and the dimension of said cutting area, also in the longitudinal direction of the workpiece. The gripping rollers furthermore help to achieve a higher degree of precision in that the workpiece cannot move in a direction perpendicularly to its longitudinal direction during the cutting operation.

In an advantageous embodiment, the robot arm is fitted with a feeler gauge for measuring the position and/or the dimensions of the workpiece prior to the cutting operation, wherein the control unit and the feeler gauge are arranged for measuring the workpiece prior to the cutting operation, whereas control unit is arranged for controlling the cutting element on the basis of a preprogrammed cutting contour and the measured values on the workpiece.

In this way it is possible to measure tolerances in the workpiece and work said tolerances into the preprogrammed theoretical cutting contour. The degree of precision is considerably enhanced in this way.

The invention also relates to a method for cutting workpieces, as claimed in claim 7.

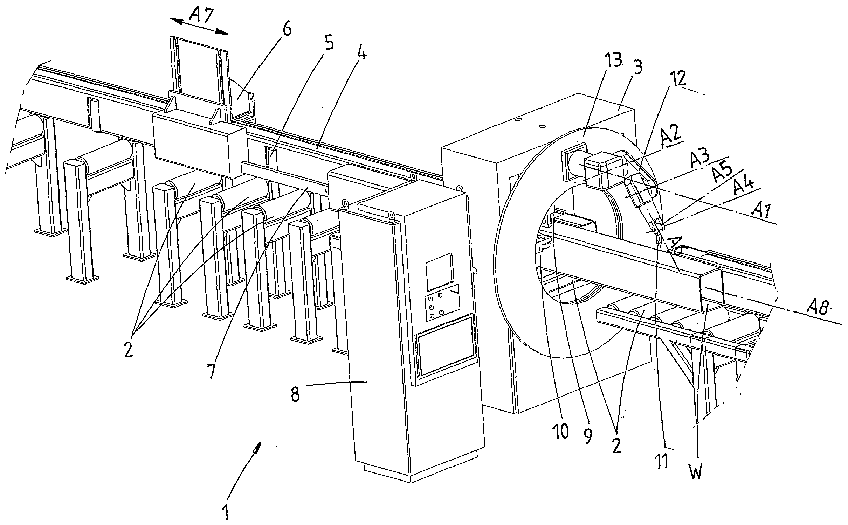

The invention will be explained in more detail hereinafter with reference to the drawing, which schematically shows an embodiment of the invention.

The only figure of the drawing is a perspective view of a part of an apparatus according to the invention for cutting elongated workpieces.

The drawing shows an apparatus for cutting workpieces, in this case a box girder W. It should be understood that also other types of workpieces, elongated or non-elongated workpieces, among which sections having the most widely divergent cross-sectional shapes, can be cut with the apparatus according to the invention.

The apparatus comprises a support for supporting the workpiece W, in the present case consisting of a roller conveyor 1 comprising a large number of rollers 2 which are spaced a desired distance apart, in which the rollers are spaced less far apart at the location of the cutting area than at a location some distance away therefrom. In this case, the roller conveyor 1 is divided into two parts on either side of a frame 3. The roller conveyor 1 also comprises a lateral guide 4 with rollers 5 for guiding the workpiece W in lateral direction. The lateral guide 4 guides a trolley 6 fitted with a gripper 7 for gripping the workpiece W, which functions to move the workpiece W without slip during the cutting operation. To this end, the trolley 6 is fitted with a driving means which can be controlled by means of a control unit 8 arranged for controlling the entire apparatus.

The aforementioned frame 3 is provided with an opening for passing the workpiece W therethrough. Hydraulically adjustable gripping rollers 9 and 10 are arranged in said opening for holding down the workpiece W on the rollers 2 and 5 of the support 1 in horizontal and vertical direction, so that the workpiece W can only move in its longitudinal direction.

The frame 3 is intended to support a cutting element, of which various forms are possible, such as plasma cutting torches, laser cutters, autogenous torches, water jet cutters and the like. The cutting element 11 is mounted on the robot arm 12, which is in turn mounted on a carrier, in this case consisting of a rotary ring 13, which is rotatably mounted on the frame, thus forming a circular guide for the robot arm 12. Preferably, the range of rotation of the rotary ring 13 is around 360°, but it may also be larger or smaller. As is indicated at A1-A6 in the drawing, the robot arm 12 possesses six degrees of freedom. Said axes of rotation are: A1: an axis between the robot arm 12 and the rotary ring 13 parallel to the central axis of the rotary ring 13; A2 and A3: parallel axes of an upper arm portion of the robot arm 12 perpendicularly to the central axis of the rotary ring 13; A4, A5, A6: 3 perpendicular axes of rotation between the torch 11 and the lower arm portion of the robot arm 12. In addition to said six axes of rotation, there is the axis of rotation A8 of the rotary ring 13 and the movement of the workpiece W by means of the trolley 6 in the direction A7, as a result of which the cutting element 11 and the workpiece W possess eight degrees of freedom relative to each other, enabling optimum positioning of the two relative to each other. The robot arm has a relatively small working range, but due to the presence of the rotary ring 13 and the possibility to move the workpiece W over the roller conveyor 1, a very large working range as well as a very high degree of flexibility as regards the position of the torch is obtained.

The robot arm 12 is arranged for quick tool changes, for example of the cutting element. The tool may also consist of a feeler gauge (not shown), which measures the position and the dimensions of the workpiece W either during or, preferably, prior to the cutting operation. The measured values are fed to the control unit 8 and combined with the theoretical cutting contour, which has been pre-programmed. The control unit 8 makes use of vector calculations, in which the theoretical contour is adapted to the actual values of the workpiece W.

The control unit 8 comprises a programming station, computer controls, control electronics and servo amplifiers for controlling the apparatus. The control unit includes an automatically switching, built-in heating unit, so that the unit is protected against low temperatures and against moisture. Furthermore, an air-conditioning unit may be provided if there is a risk of high temperatures.

From the foregoing it will be apparent that the invention provides a cutting apparatus and a cutting methods which are remarkable for their precision and their flexibility.

The invention is not limited to the embodiment as described above and shown in the drawing, which can be varied in many ways within the scope of the invention. Thus, the robot arm may possess more or fewer (2, 3, 4 or 5) axes of rotation, and the carrier may also be configured as a trolley which is moved along a circular rail.

## Claims

1. An apparatus for cutting workpieces (W), in particular elongated workpieces (W), such as tubular members and beams, which apparatus comprises a support (1) for supporting the workpiece, a frame (3), a circular guide on the frame, on which a carrier (13) is mounted, which carrier is provided with a controllable driving mechanism, wherein said carrier and said support are positioned relative to each other such that the workpiece extends through the guide during the cutting operation, a cutting element (11) connected to said carrier, as well as a control unit (8) for controlling said carrier, **characterized in that** the cutting element (11) is connected to the carrier (13) via a robot arm (12) having at least four axes of rotation, which robot arm with the cutting element connected thereto on one end is attached to the carrier on its other end, whereas the control unit (8) is furthermore arranged for controlling the robot arm (12).

2. An apparatus according to claim 1, wherein the robot arm (12) comprises at least six axes of rotation (A1-A6) to be controlled by the control unit.

3. An apparatus according to claim 1 or 2, wherein the support (1) comprises driving means (6) to be controlled by the control unit (8) for moving the workpiece in its longitudinal direction during the cutting operation on the workpiece.

4. An apparatus according to any one of the preceding claims, wherein the support (1) comprises a roller conveyor and gripping rollers (9, 10) at least substantially at the location of the circular guide.

5. An apparatus according to any one of the preceding claims, wherein the robot arm (12) is fitted with a feeler gauge for measuring the position and/all the dimensions of the workpiece (W).

6. An apparatus according to claim 5, wherein the control unit (8) and the feeler gauge are arranged for measuring the workpiece (W) prior to the cutting operation, whereas the control unit (8) is arranged for controlling the cutting element (11) on the basis of the preprogrammed cutting contour and the measured values on the workpiece (W).

7. A method for cutting workpieces (W), in particular elongated workpieces, such as tubular members and beams, wherein first of all the position and/or the dimensions of the workpiece are measured by means of a feeler gauge, the measurement data are transmitted to the control unit, and a cutting element (11) is controlled on the basis of the pre-fed cutting contour and the actual measurement data on the workpiece (W), wherein the cutting element (11)is rotated through an angle of maximally 360° about an axis parallel to the workpiece (W) by means of a circular guide (13) so as to carry out the cutting operation, and wherein the cutting element (11) is also rotated about a number of other axes by means of a robot arm, while the cutting element (11) and the workpiece (W) are relatively moved in longitudinal direction of the workpiece during the cutting operation.

8. A method according to claim 7, wherein the workpiece (W) is clamped down by means of gripping rollers (9, 10) at the location of the cutting element (11), in such a manner that only movement in longitudinal direction of the workpiece (W) is allowed.

## Patentansprüche

1. Vorrichtung zum Schneiden von Werkstücken (W), insbesondere länglichen Werkstücken (W), wie rohrförmigen Elementen und Balken, welche Vorrichtung eine Stütze (1) zum Abstützen des Werkstücks, einen Rahmen (3), eine kreisförmige Führung an dem Rahmen, an welcher ein Träger (13) montiert ist, welcher Träger mit einem steuerbaren Antriebsmechanismus versehen ist, wobei der Träger und die Stütze relativ zueinander derart positioniert sind, dass sich das Werkstück während des Schneidvorgangs durch die Führung hindurch erstreckt, ein Schneidelement (11), das mit dem Träger verbunden ist, sowie eine Steuereinheit (8) zur Steuerung des Trägers aufweist, **dadurch ge**k**ennzeichnet, dass** das Schneidelement (11) über einen Roboterarm (12), der wenigstens vier Drehachsen hat, mit dem Träger (13) verbunden ist, welcher Roboterarm, der an einem Ende mit dem Schneidelement verbunden ist, an seinem anderen Ende mit dem Träger verbunden ist, während die Steuereinheit (8) ferner zur Steuerung des Roboterarmes (12) angeordnet ist.

2. Vorrichtung nach Anspruch 1, wobei der Roboterarm (12) wenigstens sechs Drehachsen (A1-A6) aufweist, die von der Steuereinheit steuerbar sind.

3. Vorrichtung nach Anspruch 1 oder 2, wobei die Stütze (1) von der Steuereinheit (8) steuerbare Antriebsmittel (6) zum Bewegen des Werkstücks in seiner Längsrichtung während des Schneidvorgangs an dem Werkstück aufweist.

4. Vorrichtung nach einem der vorhergehenden Ansprüche, wobei die Stütze (1) einen Rollenförderer und Greifrollen (9, 10) wenigstens im Wesentlichen an der Stelle der kreisförmigen Führung aufweist.

5. Vorrichtung nach einem der vorhergehenden Ansprüche, wobei der Roboterarm (12) mit einer Fühlerlehre zum Messen der Position und/oder der Abmessungen des Werkstücks (W) ausgerüstet ist.

6. Vorrichtung nach Anspruch 5, wobei die Steuereinheit (8) und die Fühlerlehre zum Messen des Werkstücks (W) vor dem Schneidvorgang angeordnet sind, während die Steuereinheit (8) zur Steuerung des Schneidelements (11) auf der Basis der vorprogrammierten Schneidkontur und der gemessenen Werte an dem Werkstück (W) angeordnet ist.

7. Verfahren zum Schneiden von Werkstücken (W), insbesondere länglichen Werkstücken, wie rohrförmigen Elementen und Balken, wobei zuallererst die Position und/oder die Abmessungen des Werkstücks mittels einer Fühlerlehre gemessen werden, die Messdaten an die Steuereinheit übertragen werden, und ein Schneidelement (11) auf der Basis der vorprogrammierten Schneidkontur und der aktuellen Messdaten an dem Werkstück (W) gesteuert wird, wobei das Schneidelement (11) mittels einer kreisförmigen Führung (13) um einen Winkel von maximal 360° um eine Achse parallel zu dem Werkstück (W) gedreht wird, um den Schneidvorgang durchzuführen, und wobei das Schneidelement (11) mittels eines Roboterarmes auch um eine Anzahl von anderen Achsen gedreht wird, während das Schneidelement (11) und das Werkstück (W) während des Schneidvorgangs in Längsrichtung des Werkstücks relativ bewegt werden.

8. Verfahren nach Anspruch 7, wobei das Werkstück (W) an der Stelle des Schneidelements (11) mittels Greifrollen (9, 10) derart niedergehalten wird, dass nur eine Bewegung in Längsrichtung des Werkstücks (W) ermöglicht wird.

## Revendications

1. Appareil pour débiter des pièces à travailler (W), en particulier des pièces à travailler allongées (W), telles que des éléments tubulaires et des poutres, lequel appareil comprend un support (1) pour supporter la pièce à travailler, un cadre (3), un guide circulaire sur le cadre, sur lequel est monté un chariot (13), lequel chariot est muni d'un mécanisme d'entraînement réglable, dans lequel ledit chariot et ledit support sont positionnés l'un par rapport à l'autre de sorte que la pièce à travailler s'étend à travers le guide pendant l'opération de découpe, un élément de découpe (11) relié audit chariot, ainsi qu'une unité de commande (8) pour commander ledit chariot,
**caractérisé en ce que** l'élément de découpe (11) est relié au chariot (13) via un bras de robot (12) ayant au moins quatre axes de rotation, lequel bras de robot avec l'élément de découpe relié à celui-ci à une extrémité est fixé au chariot à son autre extrémité, tandis que l'unité de commande (8) est agencée en outre pour commander le bras de robot (12).

2. Appareil selon la revendication 1, dans lequel le bras de robot (12) comprend au moins six axes de rotation (A1-A6) à commander par l'unité de commande.

3. Appareil selon la revendication 1 ou 2, dans lequel le support (1) comprend un moyen d'entraînement (6) à commander par l'unité de commande (8) pour déplacer la pièce à travailler dans sa direction longitudinale pendant l'opération de découpe sur la pièce à travailler.

4. Appareil selon l'une quelconque des revendications précédentes, dans lequel le support (1) comprend un transporteur à rouleaux et des rouleaux de serrage (9, 10) au moins sensiblement à l'emplacement du guide circulaire.

5. Appareil selon l'une quelconque des revendications précédentes, dans lequel le bras de robot (12) est équipé d'une jauge d'épaisseur pour mesurer la position et/toutes les dimensions de la pièce à travailler (W).

6. Appareil selon la revendication 5, dans lequel l'unité de commande (8) et la jauge d'épaisseur sont agencées pour mesurer la pièce à travailler (W) avant l'opération de découpe, tandis que l'unité de commande (8) est agencée pour commander l'élément de découpe (11) sur la base du contour de découpe préprogrammé et des valeurs mesurées sur la pièce à travailler (W).

7. Procédé pour débiter des pièces à travailler (W), en particulier des pièces à travailler allongées, telles que des éléments tubulaires et des poutres, dans lequel, tout d'abord, la position et/ou les dimensions de la pièce à travailler sont mesurées au moyen d'une jauge d'épaisseur, les données de mesure sont transmises à l'unité de commande, et un élément de découpe (11) est commandé sur la base du contour de découpe pré-alimenté et des données réelles de mesure sur la pièce à travailler (W), dans lequel l'élément de découpe (11) est entraîné en rotation sur un angle de 360° maximum autour d'un axe parallèle à la pièce à travailler (W) au moyen d'un guide circulaire (13) de manière à réaliser l'opération de découpe, et dans lequel l'élément de découpe (11) est également entraîné en rotation autour d'un certain nombre d'autres axes au moyen d'un bras de robot, tandis que l'élément de découpe (11) et la pièce à travailler (W) sont déplacés relativement dans la direction longitudinale de la pièce à travailler pendant l'opération de découpe.

8. Procédé selon la revendication 7, dans lequel la pièce à travailler (W) est maintenue par serrage au moyen de rouleaux de serrage (9, 10) au niveau de l'emplacement de l'élément de découpe (11), de telle manière que seul le mouvement dans la direction longitudinale de la pièce à travailler (W) est possible.
